# EUROPEAN PATENT APPLICATION

(11) **EP 2 717 190 A1**
(43) Date of publication of application: **09.04.2014**
(21) Application number: 13187559.3
(22) Date of filing: 07.10.2013
(51) Int. Cl.: G06F 21/62

(54) **Apparatus and method for protecting data in terminal**

(30) Priority: 08.10.2012 KR 20120111443
(71) Applicant: Samsung Electronics Co., Ltd, Gyeonggi-do 443-742 (KR)
(72) Inventor: Kim, Jong-Su, 443-742 Gyeonggi-do (KR)
(74) Representative: Nederlandsch Octrooibureau

(57) **Abstract**

An apparatus and a method for protecting data in a lock-screen state of a terminal are provided. The apparatus includes a controller configured to prevent access to data by performing a protection function for the data in a lock screen mode and to release the protection function for the data in a lock screen release mode, and a memory for providing a memory protection area for the protection function in the lock screen mode.

## Description

### BACKGROUND OF THE INVENTION

### 1. Field of the Invention

The present invention relates to an apparatus and a method for protecting data in a terminal. More particularly, the present invention relates to an apparatus and a method for protecting data in a lock-screen state of a terminal.

### 2. Description of the Related Art

A terminal may include a lock screen function to protect internal data.

The lock screen function is configured and executed according to a user's options. When a user does not use a terminal for a predetermined period of time, the terminal automatically shifts (is put) into a lock screen mode. Then, the user may release the lock screen by performing a password input operation (e.g., a Personal Identification Number (PIN), a password, a pattern lock, or human information such as facial recognition), or a predetermined operation (e.g., a push and a touch). A lock screen mode is thus a state in which access to the terminal is (temporarily) limited.

While the lock screen is useful to reduce power consumption, protect a screen, and prevent malfunctioning of a touch device, the most important function of the lock screen is a security function which enables important data of the terminal to be concealed.

However, when an abnormal program such as malicious software (malware) is installed in the terminal, an action which is not intended by the user, for example, an illegal data transmission, may occur. Such an unintended action can incur costs for the user. Therefore, it has become difficult to prevent the gradually increasing occurrence of unintended data leakage.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages described below. Accordingly, an aspect of the present invention is to provide an apparatus and a method for protecting data in a lock-screen state of a terminal.

In accordance with an aspect of the present invention, an apparatus for protecting data in a terminal is provided. The apparatus can be a hardware subsystem of the terminal. It can be provided as hardware or as a combination of hardware and software. The apparatus includes a controller for preventing access to the data by performing a protection function for the data in a lock screen mode. The protection function can comprise processing the data to be protected according to a protection method. The protection method can be one of a data encryption method, a data access authority denial method, a data falsification prevention method, and an external memory mount access release method. The processed data may be stored in a memory protection area. The memory protection area can be in a memory of the apparatus, or an external (networked) memory. The controller can be configured to release the protection function when the terminal exits the lock screen mode. Releasing the protection function may comprise reversing the effects of the protection method, for example decoding encrypted data.

In accordance with another aspect of the present invention, a method of protecting data in a terminal is provided. The method includes preventing access to the data by performing a protection function for the data in a lock screen mode, and releasing a protection function for the data in a lock screen release mode. The functionality of the apparatus or terminal according the invention, as disclosed in this application, is also applicable to the method according the invention and vice versa.

By providing an apparatus and a method for protecting data in a terminal, the present invention can strengthen the security of data of the terminal in a lock screen state of the terminal, so as to protect against leakage of data without permission.

Other aspects, advantages, and salient features of the invention will become apparent to those skilled in the art from the following detailed description, which, taken in conjunction with the annexed drawings, discloses exemplary embodiments of the invention. Various exemplary embodiments according the invention may be combined to form further embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:
FIG. 1 is a block diagram illustrating a construction of a terminal according to an exemplary embodiment of the present invention;
FIG. 2 is a flowchart illustrating a process of data protection setting in a lock screen mode of a terminal according to an exemplary embodiment of the present invention; and
FIG. 3 is a flowchart illustrating a process of performing a data protection fun ction in a lock screen mode of a terminal according to an exemplary embodiment of t he present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims.

It is to be understood that the singular forms "a," "an," and "the" include plural referents unless the context clearly dictates otherwise. Thus, for example, reference to "a component surface" includes reference to one or more of such surfaces.

A terminal according to an exemplary embodiment of the present invention includes a portable terminal and a fixed terminal. The portable terminal may be an electronic apparatus that can be easily carried, such as a video phone, a mobile phone, a smart phone, an International Mobile Telecommunication 2000 (IMT-2000) terminal, a Wideband Code Division Multiple Access (WCDMA) terminal, a Universal Mobile Telecommunication Service (UMTS) terminal, a Personal Digital Assistant (PDA), a Portable Multimedia Player (PMP), a Digital Multimedia Broadcasting (DMB) terminal, an E-book, a portable computer (notebook, tablet, etc.), a digital camera, and the like. In addition, the fixed terminal may be a desktop, a personal computer, and the like.

While a data protection function will be described in an exemplary embodiment of the present invention, a folder and a file including data may perform a protection function with a similar technique.

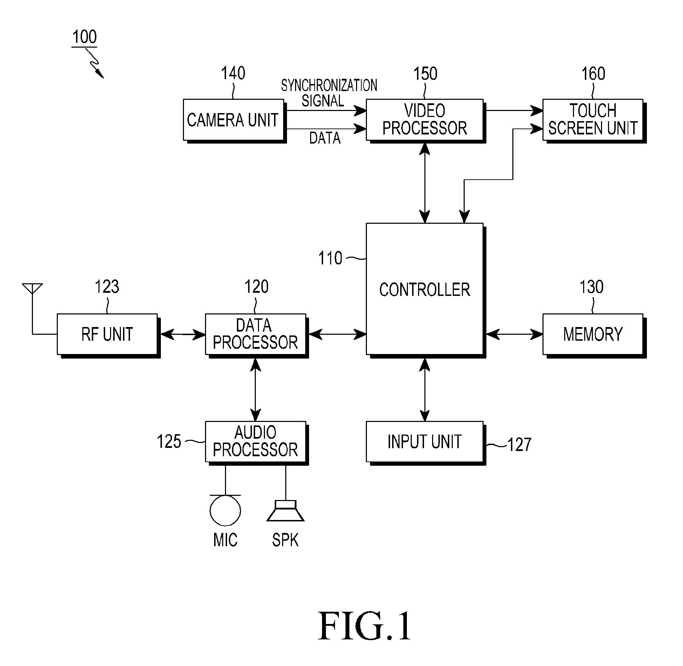

FIG. 1 is a block diagram illustrating a construction of a terminal according to an exemplary embodiment of the present invention.

Referring to FIG. 1, a terminal 100 includes a Radio Frequency (RF) unit 123 performs a wireless communication function of a terminal. The RF unit 123 includes an RF transmitter for up-converting a frequency of a transmitted signal and amplifying the signal, and an RF receiver for low-noise-amplifying a received signal and down-converting a frequency of the received signal. The data processor 120 includes a transmitter for encoding and modulating the transmitted signal and a receiver for decoding and demodulating the received signal. The data processor 120 may include a MOdulator-DEModulator (MODEM) and a COder-DECoder (CODEC), wherein the CODEC may include a data CODEC for processing packet data, or the like, and an audio CODEC for processing audio signals such as a voice, or the like. The audio processor 125 serves to play the received audio signal output from the data processor 120 through a speaker SPK and performs a function of transmitting a transmitted audio signal generated from a microphone MIC to the data processor 120.

The input unit 127 includes keys for inputting alphanumeric data and function keys for setting various functions. The keys may include hard keys and soft keys. A function of the input unit 127 may be combined with or performed by the touch screen unit 160.

The memory 130 may include a program memory and a data memory. The program memory may store programs for controlling general operations of the terminal and programs for making a control to perform a protection function for data in the lock screen mode according to an exemplary embodiment of the present invention. Further, the data memory performs a function of temporarily storing data generated while performing the programs.

The memory 130 according to the exemplary embodiment of the present invention stores a lock screen protection data table, which includes data selected to be protected in a lock screen mode, a protection method of the data to be protected, and a protection area of the data to be protected.

The protection data table of the lock screen may be configured as in Table 1.

**Table 1**

| Protection data | Protection method | Protection area |
|---|---|---|
| Data A | Encryption 1 | Secret area |
| Data B | Encryption 2 | Secret area |
| Data C | Access authority denial | Original area |
| Data D | Falsification prevention | Original area |
| . | . | . |
| . | . | . |
| . | . | . |

The memory 130 stores various encryption methods according to an exemplary embodiment of the present invention, and the encryption method may include a symmetrical key scheme such as the Advanced Encryption Standard (AES), the Data Encryption Standard (DES), or the like, and an asymmetrical key scheme using a public key, or the like.

The memory 130 according to an exemplary embodiment of the present invention stores various falsification prevention methods for preventing falsification of data, the falsification prevention method may include the Message-Digest Algorithm (MD5), Secure Hash Algorithm (SHA), or the like.

The memory 130 according to an exemplary embodiment of the present invention includes a secret area for storing data to be protected in the lock screen mode. That is, the secret area is an area in the memory 130 for storing data that is to be kept secret.

The memory 130 according to an exemplary embodiment of the present invention includes a protection data access record area for recording accessed application information and accessed data to be protected when a certain access is attempted to the data to be protected in the lock screen mode.

The controller 110 performs a function of controlling general operations of the terminal.

The controller 110 according to an exemplary embodiment of the present invention controls to determine data to be protected, a protection method which may be determined according to the kind of the data to be protected, and a protection area of the data to be protected in a data protection setting mode of the lock screen.

When an automatic data setting is selected in a process of selecting the data to be protected, the controller 110 displays the recommended data to be protected and sets data selected from the recommended data to be protected, as the data to be protected.

The recommend function is a function of recommending data from among system data and user data stored in the terminal to a user, where the data recommended to be protected includes data that a user is likely to desire be protected, and may include, for example, address book data, messages including chatting data, e-mail data, usage data such as logs, or the like.

When a manual data setting is selected in the process of selecting the data to be protected, the controller 110 displays all data stored in the memory 130 and sets the data selected from the all data as the data to be protected. That is, if the function is configured for manual data selection, a user individually selects each item or category of data to be protected.

The controller 110 according to an exemplary embodiment of the present invention may automatically set at least one protection method (e.g., a data encryption method, a data access authority denial method, a data falsification prevention method) capable of performing a protection function for each of the data to be protected according to the kind of the data to be protected.

The controller 110 may set the protection method for each of the data to be protected by considering the size of the data to be protected or a load of the data when the data has been encoded.

For example, when the size of the data to be protected is smaller than or equal to a threshold, the controller 110 may set an encryption method. Here, the controller may set various encryption methods according to the size of the data to be protected, which is smaller than or equal to the threshold. Further, the controller may set a data access authority denial method or a data falsification prevention method, according to a priority of importance of the data to be protected, the size of which is smaller than or equal to the threshold.

The protection method set for the protection data may be modified by a user. Also, the protection method set for the protection data may be manually set by a user.

Further, when data to be protected is data of an external memory which can be detachably attached to the terminal, the controller 110 according to an exemplary embodiment of the present invention may release the access to the external memory only systemically even while maintaining the state in which the external memory is physically inserted in the terminal, by releasing the mount access to the external memory. That is, it is not necessary for a user to physically remove the external memory from the terminal in order to protect data stored in the external memory.

Also, the controller 110 according to an exemplary embodiment of the present invention may set a protection area in the memory 130 in which the data to be protected is to be stored in the lock screen mode.

The protection area, if present, may include one or more of an original area, a secret area, and a server connected through a network, and may be either selected by a user, or automatically set in a sequence of the server, the secret area, and the original area according to the importance of data.

The protection area may be automatically set according to the protection method of the data to be protected. For example, data to be protected, wherein an encryption method has been set as a protection method of the data to be protected, may be set as the server or the secret area, and data to be protected, wherein an access authority denial or a falsification prevention method has been set as a protection method thereof, may be set to be stored in the original area of the data.

Further, the controller 110 according to an exemplary embodiment of the present invention controls to prevent access to the protection data by performing a protection function for the data to be protected in the lock screen mode of the terminal.

In order to prevent the lock screen from being released before the protection function is completed or to prevent the lock screen from being released directly after the protection function is completed after shifting into the lock screen mode, the controller 110 controls to prevent access to the protection data by performing the protection function of the data to be protected after a prescribed time has elapsed, when the terminal has been set as the lock screen and shifted into the lock screen mode.

Further, the controller 110 according to an exemplary embodiment of the present invention determines whether the data protection of the lock screen mode has been set in the lock screen mode. When the data protection of the lock screen mode has been set, the controller 110 performs the protection function according to a preset protection method and then controls to store the data to be protected in the preset memory protection area.

The controller 110 encodes data to be protected, wherein an encryption method has been set as a protection method thereof in the lock screen mode, by the set encryption method, and shifts data to be protected, wherein an access authority denial method has been set as a protection method thereof, into an access-denied mode. In addition, the controller 110 generates a signature for determining whether data to be protected, wherein a falsification prevention method has been set as a protection method thereof, is falsified data, and stores a signature thereof in the memory 130. Simultaneously, the controller 110 stores the signature by including the signature in the data to be protected.

While preventing access to the data by performing the protection function for the data in the lock screen mode, the controller 110 according to an exemplary embodiment of the present invention may check (detect) an access attempt to the protection data and then record the access attempt in a protection data access record area of the memory 130.

When access is attempted to the data to be protected in the lock screen mode, the controller 110 detects this attempt and may store information of the application attempting the access, and of the data to be protected to which the access is attempted, in the protection data access record area of the memory 130.

Further, the controller 110 according to an exemplary embodiment of the present invention releases the protection function for the data to be protected in the lock screen release mode and controls the data to be protected to return to the state before the lock screen mode.

That is, the controller 110 decodes the encoded data to be protected, restores the data to be protected, which has been shifted into the access-denied mode, into the original access-allowed mode, and resets the mount access to the external memory, if physically attached.

Further, the controller 110 according to an exemplary embodiment of the present invention controls to notify that the information has been recorded in the access record area of the data to be protected of the memory 130 in the lock screen release mode and access has been attempted in the lock screen mode, and to display information notifying of the application attempting the access and the data to be protected to which the access was attempted.

Further, the controller 110 according to an exemplary embodiment of the present invention determines whether data to be protected, wherein a falsification prevention method has been set as a protection method thereof, is falsified data in the lock screen release mode. When the data to be protected is falsified data, the controller 110 controls to display that the data to be protected has been falsified.

Further, the controller 110 compares a signature value generated in a state of the lock screen with data stored as the data to be protected in a state in which the lock screen is released. When the signature value does not match with the data, the controller 110 detects that the data to be protected has been falsified and notifies this to a user. The falsification prevention method may be used as a method of determining integrity of data through, for example, a hash value in an algorithm such as MD5, SHA, or the like.

The camera unit 140 films video data and includes a camera sensor converting a filmed optical signal into an electronic signal and a signal processor converting an analog video signal filmed from the camera sensor into digital data. The camera sensor may be a Charge Coupled Device (CCD) or Complementary Metal Oxide Semiconductor (CMOS) sensor or the like, and the signal processor may be implemented by a Digital Signal Processor (DSP). In addition, the camera sensor and the signal processor may be implemented either integrally or separately.

A video processor 150 performs an Image Signal Processing (ISP) for displaying a video signal output from the camera unit 140 to a touch screen unit 160, and the ISP performs functions such as a Gamma correction, an interpolation, a spatial change, an image effect, an image scale, an Auto White Balance (AWB), an Automatic Exposure (AE), an Auto Focus (AF), or the like. Accordingly, the video processor 150 processes a video signal output from the camera unit 140 frame by frame, and outputs the frame video data according to a characteristic and a size of a touch screen unit 160. In addition, the video processor 150 includes a video CODEC and performs a function of compressing a frame video data displayed to the touch screen unit 160 with the set method or a function of reconstructing the compressed frame video data to an original frame video data. The video CODEC may be a Joint Photographic Experts Group (JPEG) CODEC, a Moving Picture Experts Group (MPEG)-4 CODEC, a Wavelet CODEC, or the like. The video processor 150 includes an On Screen Display (OSD) function and may output the On Screen Display data depending on a size of the displayed screen under a control of the controller 110.

The touch screen unit 160 may operate as an input unit or a display unit. When the touch screen unit 160 operates as a display unit, the touch screen unit 160 displays a video signal output from the video processor 150 on the screen and user data output from the controller 110. Otherwise, when the touch screen unit 160 operates as an input unit, the touch screen unit 160 may display soft keys such as a key input unit 127.

The touch screen unit 160 is configured by a Touch Screen Panel (TSP) including a plurality of sensor panels, which may include a capacitive sensor panel capable of recognizing a hand touch and an electromagnetic induction sensor panel capable of recognizing a detail touch such as a touch pen or stylus.

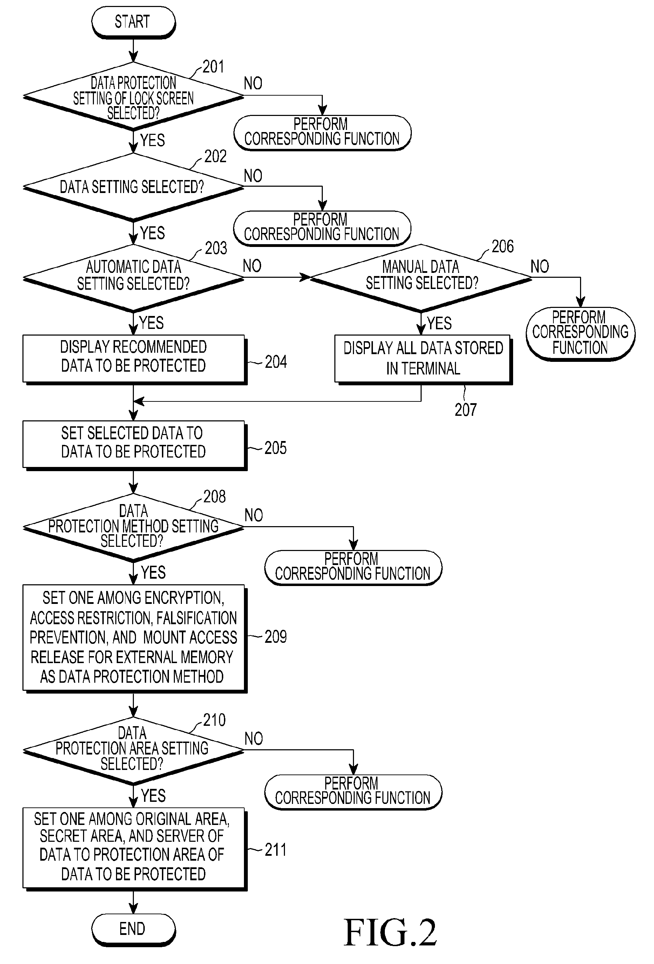

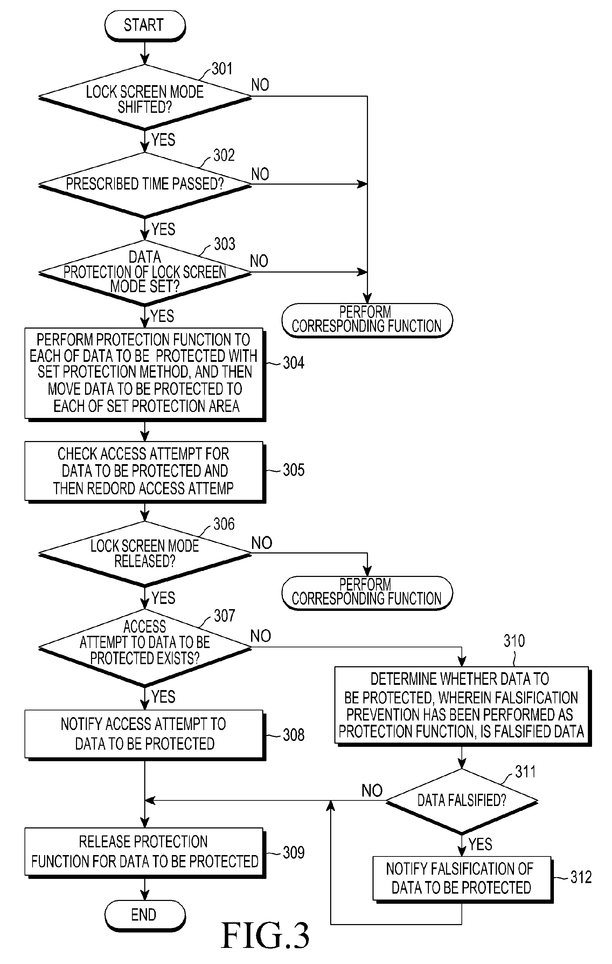

A data protection operation in the lock screen mode in the terminal as described above will be described in more detail through FIGs. 2 and 3.

FIG. 2 is a flowchart illustrating a process of a data protection setting in a lock screen mode of a terminal according to an exemplary embodiment of the present invention.

Hereinafter, an exemplary embodiment of the present invention will be described in more detail with reference to FIG. 1 as well as FIG. 2.

Referring to FIG. 2, when a data protection setting of a lock screen in a terminal is selected, the controller 110 detects this selection in step 201 and shifts the terminal into the data protection setting mode of the lock screen. In step 202 it is determined whether a data setting has been selected.

When the data setting is selected in the data protection setting mode of the lock screen, the various kinds of data settings are displayed. When an automatic data setting among the kinds of the data settings is selected, the controller 110 detects this selection in step 203 and proceeds to step 204 of displaying data recommended to the data to be protected among data of the terminal.

When predetermined data or all data among the recommended data displayed in step 204 is selected by a user, the controller 110 proceeds to step 205 in which the controller 110 sets the selected data as the data to be protected.

Alternatively, when a manual data setting is selected, the controller 110 detects this selection in step 206 and proceeds to step 207 of displaying all data stored in the memory 130.

When the predetermined data among all the data displayed in the step 207 is selected by the user, the controller 110 proceeds to step 205 of setting the selected data as data to be protected.

When a data protection method setting is selected by the user after the data to be protected setting is completed, the controller 110 detects this selection in step 208, and proceeds to step 209 to set a protection method for each of the data to be protected.

In step 209, the controller 110 sets one of a data encryption method, a data access authority denial (access restriction) method, and a data falsification prevention method as the protection method, according to the kind of the data to be protected. That is, by considering the size of the data to be protected or a load of the data at the time of data encryption, a corresponding protection method is selected. In step 209, a protection method for the automatically set data to be protected may be changed by the user and a protection method for the data to be protected may be manually set by the user.

Further, in step 209, when a data protection memory area setting is selected by the user after the protection method for each of the data to be protected has been set, the controller 110 detects this selection in step 210, and proceeds to step 211 of setting a protection area of the data to be protected.

The protection area includes an original area, a secret area, and a transmission of a server connected through a network or a cloud-service of data, and may be either selected by a user, or automatically set in a sequence of the server, the secret area, and the original area according to the importance of the data.

Therefore, in step 211, the controller 110 displays an original area, a secret area, and a transmission of a server connected through a network or a cloud-service corresponding to the kind of the protection area. In addition, the controller 110 may set the protection area set by the user for each of the data to be protected as the protection area of the data to be protected.

In step 211, the protection area may be automatically set in a sequence of the server, the secret area, and the original area according to the importance of the data to be protected, or the protection area may be set according to the protection method set in the data to be protected. For example, the protection area, wherein an encryption method has been set as a protection method of the data to be protected, may be set as a server or a secret area and data to be protected, wherein an access authority denial method or a falsification prevention method has been set as a protection method thereof may be set to be stored in the original area of the data.

Moreover, the data to be protected and stored in the secret area may be stored in the secret area without a setting of the protection method as it is.

The data to be protected, the protection method, and the protection area which are set in the data protection setting mode of the lock screen mode may be either corrected by the user in the correction mode or automatically set according to a change of the protection data, the protection method, or the protection area.

Through a process shown in FIG. 2, the user may set the data protection of the lock screen mode and complete a setting for the data to be protected including a protection function in the lock screen mode, a protection method for the data to be protected, and a protection area storing the data to be protected.

FIG. 3 is a flowchart illustrating a process of performing a data protection function in a lock screen mode of a terminal according to an exemplary embodiment of the present invention.

Hereinafter, an exemplary embodiment of the present invention will be described in more detail with reference to FIG. 1 as well as FIG. 3.

Referring to FIG. 3, when a terminal is shifted into a lock screen mode, the controller 110 detects this shift in step 301 and proceeds to step 302 of determining whether a prescribed time has passed after the terminal is shifted into the lock screen mode.

When the prescribed time has passed after the terminal has been shifted into the lock screen mode, the controller 110 detects this in step 302 and proceeds to step 303 of determining whether the data protection of the lock screen mode has been set in the terminal.

When the data protection of the lock screen mode has been set in the terminal, the controller 110 detects this in step 303 and proceeds to step 304 of storing each of the data to be protected in each of the preset memory protection areas after the protection function is performed as the preset protection method.

When the terminal is shifted into the lock screen mode, the controller 110 proceeds to step 304 of determining whether the data protection of the lock screen mode has been set and performing the protection function for the data to be protected.

In step 304, the controller 110 extracts the data to be protected, extracts the protection method set for each of the data to be protected, and then performs the protection function by the protection method set for each of the data to be protected.

For example, in the case of protection data, wherein an encryption method has been set as a protection method thereof, the controller 110 encodes the protection data. In the case of the protection data, wherein an access authority denial method has been set as a protection method thereof, the controller 110 changes the data access allowance to deny access. Further, in the case of protection data, wherein a falsification prevention method has been set as a protection method thereof, the controller 110 generates a signature capable of determining a falsification of data in the lock screen release mode and stores the signature in the memory 130. At the same time, the controller 110 stores the signature by including it in the data to be protected.

Further, in the case of the data to be protected stored in the external memory, wherein a mount access release of the external memory has been set as a protection method thereof, the controller 110 systemically releases the mount access to the external memory.

When the protection function of the data to be protected is completed, the controller 110 moves the data to be protected to the protection area set for each of the data to be protected.

In the lock screen mode in which the protection function for the data to be protected is completed, the controller 110 checks an access attempt to the data to be protected. Further, when access to the data to be protected is attempted by an application, the controller 110 proceeds to step 305 of recording information of the application having attempted access to the protection data access record area of the memory 130 and the data to be protected to which the access has been attempted.

Thereafter, when an operation of releasing the lock screen by the user, such as input of a password, is received, the controller 110 detects this reception in step 306 and shifts the terminal into the lock screen release mode.

When the terminal is shifted into the lock screen release mode and a record exists in the protection data access record area of the memory 130, the controller 110 detects that there has been an access attempt to the data to be protected, in step 307. Further, the controller 110 proceeds to step 308 of notifying of the access attempt to the data to be protected in a state of the lock screen and displaying the information of the application having attempted the access and the data to which the access has been attempted.

In this event, as a result of determination based on information of the application having attempted the access and the data to which the access has been attempted, the user may delete the application when the application is an illegal application, and may change the protection method for the data to be protected when the protection method for the data to be protected has been wrongly set.

When the terminal has been shifted into the lock screen release mode, the controller 110 proceeds to step 310 of determining whether the data to be protected, wherein a falsification prevention method has been set as a protection method thereof, is falsified data. In step 310, the controller 110 compares a signature value generated in the lock screen mode and stored in the memory 130 with a signature value stored in the data to be protected in the lock screen release mode. When the two values are different from each other, the controller 110 detects a falsification of the data to be protected in step 311 and proceeds to step 312 of displaying the falsification of the data to be protected.

Then, the controller 110 proceeds to step 309 of releasing the protection function of the data to be protected.

In step 309, the controller 110 decodes the encoded data to be protected and returns the access-denied mode set for the data to be protected to the state before the lock screen. Then, the controller 110 resets mount access of the external memory, if still physically connected, and controls to return the data to be protected to the state before the lock screen, that is, the original state. Further, the controller 110 stores the data to be protected again after returning data, which has been moved to a secret area or a server, among the data to be protected to the original area.

An apparatus and a method for protecting data in the terminal according to the present invention can be implemented as computer-readable code stored in a non-transitory computer-readable recording medium. The non-transitory computer-readable recording medium includes all kinds of non-transient recording devices storing data which is readable by a computer system. Examples of the recording media include a Read Only Memory (ROM), a Random Access Memory (RAM), an optical disk, a magnetic tape, a floppy disk, a hard disk, a nonvolatile memory, or the like. Further, the non-transitory computer-readable recording media may store and implement the computer-readable code with a decentralized scheme by being decentralized in a computer system connected by a network.

While the invention has been shown and described with reference to certain exemplary embodiments thereof, it will be understood by those skilled in the art that various changes in form and details may be made therein without departing from the scope of the invention as defined by the appended claims.

## Claims

1. An apparatus for protecting data in a terminal provided with a lock screen mode for limiting access to the terminal, the apparatus comprising:
a controller (110) configured to prevent access to the data by performing a protection function for the data while the terminal is in the lock screen mode and to release the protection function for the data when the lock screen mode is exited; and
a memory (130) for providing a protection area for the protection function in the lock screen mode.

2. The apparatus of claim 1, wherein, when a data protection setting of the lock screen mode is selected, the controller (110) is configured to put the terminal in the data protection setting mode of the lock screen mode and to set each of data to be protected, a protection method according to a kind of the data to be protected, and the memory protection area of the data to be protected in the data protection setting mode of the lock screen mode.

3. The apparatus of claim 1 or 2, wherein the controller (110) is configured to set data selected from recommended data to be protected or data selected from all data stored in the terminal as the data to be protected in the data protection setting mode of the lock screen mode.

4. The apparatus of any one of the preceding claims, wherein the controller (110) is configured to prevent access to the data to be protected by performing the protection function for the data to be protected according to a preset protection method and then storing the data to be protected in a preset memory protection area.

5. The apparatus of claim 4, wherein the protection method comprises one or more of a data encryption method, a data access authority denial method, a data falsification prevention method, and an external memory mount access release method,.
wherein the memory protection area comprises one or more of an original area, a secret area, and an area on a server connected through a network.

6. The apparatus of any one of the preceding claims, wherein the controller is confiured to, when a prescribed time passes in the lock screen mode, prevent access to the data to be protected by performing the protection function for the data to be protected according to a preset protection method and then storing the data to be protected in a preset memory protection area.

7. The apparatus of any one of the preceding claims, wherein the controller (1 10) is configured to, while preventing access to the data to be protected by performin g the protection function for the data to be protected in the lock screen mode, check a n access attempt to the data to be protected and record the attempt.

8. The apparatus of claim 1, wherein the controller returns to the state before the lock screen by releasing the protection function for the data to be protected in the lock screen release mode.

9. The apparatus of claim 7, wherein the controller (110) is configured to, after the lock screen mode is released, if a record of an access attempt to the data to be protected exists, provide notification of the access attempt to the data to be protected and information of the access attempt, for example by displaying the information of the access attempt.

10. The apparatus of any one of the preceding claims, wherein the controller (110) is configured to, after the lock screen mode is released, determine whether the data to be protected, when a data falsification prevention method has been set as a protection method thereof, is falsified data and to provide notification that the data to be protected has been falsified when the data to be protected is falsified data, for example by displaying a message.

11. A method of protecting data in a terminal, the method comprising:
preventing access to the data by performing (304) a protection function for the data in a lock screen mode; and
releasing (309) the protection function for the data in a lock screen release mode,
wherein performing the protection function comprises processing the data to be protected according to a protection method and then storing the processed data in a memory protection area.

12. The method of claim 11, further comprising:
putting the terminal into a data protection setting mode of a lock screen mode when a data protection setting of the lock screen is selected in the terminal;
selecting (205) data to be protected in the data protection setting mode of the lock screen;
setting (209) the protection method according to a kind of the selected data to be protected; and
selecting (211) the memory protection area of the selected data to be protected.

13. The method of claim 12, wherein the selecting of the data to be protected comprises:
displaying (204) recommended data to be protected when an automatic data setting is selected;
displaying (207) all data stored in the terminal when a manual data setting is selected; and
setting (205) data selected from the recommended data to be protected or data selected from all data stored in the terminal as the data to be protected.

14. The method of any one of claims 11-13, wherein the protection method comprises one or more of a data encryption method, a data access authority denial method, a data falsification prevention method, and an external memory mount access release method, and
wherein the memory protection area comprises one or more of an original area, a secret area, and an area on a server connected through a network.

15. The method of any one of claims 11-14, wherein the preventing of the access comprises:
determining (303) whether data protection of the lock screen mode is set in the lock screen mode; and
when the data protection of the lock screen mode has been set, performing (304) the protection function for the data to be protected with a preset protection method and then storing the data to be protected in a preset memory protection area.

16. The method of any one of claims 11-15, further comprising:
determining (302) whether a prescribed time has passed in the lock screen mode; and
when the prescribed time has passed in the lock screen mode, determining (303) whether the data protection of the lock screen mode has been set.

17. The method of any one of claims 11-16, further comprising:
checking (305) an access attempt to the data to be protected and recording the attempt.

18. The method of any one of claims 11-17, further comprising:
determining (307) whether a record of an access attempt to the data to be protected exists in the lock screen release mode; and
when the record of the access attempt to the data to be protected exists, providing (308) notification of the access attempt to the data to be protected and information of the access attempt.

19. The method of any one of claims 11-18, further comprising:
determining (310) whether the data to be protected, wherein a data falsification prevention method has been set as a protection method thereof, is falsified data in the lock screen release mode; and
when the data to be protected is falsified data, providing (312) notification th at the data to be protected has been falsified.
